# EUROPEAN PATENT SPECIFICATION

(11) **EP 3 069 917 B1**
(45) Date of publication and mention of the grant of the patent: **13.12.2017**
(21) Application number: 16155854.9
(22) Date of filing: 16.02.2016
(51) Int. Cl.: B60K 35/00, B60K 37/00, B60K 37/06, B60R 11/00, B60R 11/02, G06F 3/02, G09G 5/38

(54) **POSITIONABLE USER INTERFACE FOR VEHICULAR USE**
POSITIONIERBARE BENUTZERSCHNITTSTELLE FÜR FAHRZEUGVERWENDUNG
INTERFACE UTILISATEUR POSITIONNABLE POUR UTILISATION D'UN VÉHICULE

(30) Priority: 11.03.2015 US 201514644273; 26.01.2016 US 201615006202
(43) Date of publication of application: 21.09.2016
(73) Proprietor: Atieva, Inc., Menlo Park, CA 94025 (US)
(72) Inventor: Dore Rawlinson, Peter, Evesham, Worcestershire WR11 8SL (GB)
(74) Representative: Ungerer, Olaf

(56) References cited:
- EP-A1- 3 040 230
- DE-A1-102012 012 729
- US-A1- 2009 066 474

## Description

### FIELD OF THE INVENTION

The present invention relates generally to vehicles and, more particularly, to an adjustable user interface for use in a vehicle.

### BACKGROUND OF THE INVENTION

The user interface of a modern car uses a variety of techniques to communicate with the passengers in general, and the driver in particular. Some aspects of the user interface are designed to provide the user with information that may be required to properly and safely operate the vehicle, information such as the vehicle's current speed, the gas level for a conventional car or the charge level for an electric vehicle, the selected gear, parking brake status, external light status, turn signal status, etc. Other aspects of the user interface may be designed to provide the user, either the driver or a passenger, with the current status of various secondary vehicle systems such as the entertainment system (e.g., volume level, selected source, selected track or station, etc.), the heating, ventilation and air conditioning (HVAC) system (e.g., fan settings, thermostat settings, defroster settings, air conditioner status, etc.), auxiliary lighting (e.g., fog lamps, passenger cabin lighting, etc.), navigation system, etc. Still other aspects of the user interface are configured to provide the user with control over the various vehicle systems (e.g., turn on the car, select a gear, turn on a light, activate a turn signal or the windshield wipers, adjust the external side mirrors, open/close the moon roof, adjust the HVAC settings, adjust the entertainment system settings, interact with the navigation system, etc.). In some cars, the vehicle's user interface is also designed to allow a user to interact with non-vehicle devices that are temporarily connected to the vehicle, devices such as the user's cell phone or an mp3 player.

While much of the information and control provided by a car's user interface is common from one vehicle to the next regardless of vehicle type or manufacturer, the way in which this information and control is provided can vary dramatically. Common user interface variables include the type of switches used (e.g., toggle, push button, capacitive, physical versus touch-sensitive, etc.) as well as the type and number of display screens (e.g., color versus black & white, touch sensitive versus non-touch sensitive, screen resolution, screen size, screen placement, single versus multiple screens, etc.). Due to these design variations, some interfaces may be easier to use than others, and some interfaces may be perceived as being more modern or more expensive/luxurious than others. Since these variations often impact car sales, car makers often go to great lengths to optimize their interface.

A modern trend in the design of user interfaces, at least in high-end vehicles, is the incorporation of a touch screen into the interface. The use of a touch screen provides a number of benefits. First, by altering the information displayed and accepted, a single touch screen can be used to control multiple vehicle systems and functions, thereby simplifying the interface and conserving dashboard space. Second, through the use of instructional diagrams and pictures, it can help the user to intuit a particular vehicle function or to improve the user's interaction with a particular vehicle control system (e.g., providing fine control over the position of the car's moon roof).

While the incorporation of a touch screen into a car's user interface may provide the user with improved interface control, it can also lead to a frustrating user experience. For example, a touch screen display that is mounted high on the dashboard may be easily viewed by either the driver or the front seat passenger, but may be difficult to reach when the user wants to interact with the touch screen (e.g., to make an adjustment to a particular vehicle system). Conversely, a display mounted to be close enough to the user to allow the user to easily reach and interact with the screen may not be easy to view, especially while driving. Accordingly, what is needed is a system that provides the benefits of a touch screen display without the limitations imposed by its mounting location. The present invention provides such a system.

Another interface system showing the features of the preamble of claim 1 is known from US 2009/0066474 A1.

### SUMMARY OF THE INVENTION

The present invention provides a vehicle interface system that includes (i) a user interface mounted within the passenger cabin of a vehicle, where the user interface is a touch screen, and where the user interface is adjacent to the vehicle's driver seat; (ii) a user interface positioning system coupled to the user interface, where the user interface positioning system is adjustable between at least a first user interface position and a second user interface position, where the user interface in the first user interface position corresponds to a data entry position, where the user interface in the second user interface position corresponds to a viewing position, where the user interface in the data entry position is lower within the passenger cabin than when the user interface is in the viewing position, where the user interface in the data entry position is closer to the driver seat than when the user interface is in the viewing position, and where the user interface in the viewing position is closer to a vehicle front windshield than when the user interface is in the data entry position; and (iii) a user interface position selector coupled to the user interface positioning system, where the user interface position selector is settable to a least a first setting and a second setting, where the user interface position selector in the first setting causes the user interface positioning system to place the user interface in the first user interface position, where the user interface position selector in the second setting causes the user interface positioning system to place the user interface in the second user interface position, and where the user interface position selector is settable by a vehicle driver. Preferably when the user interface is in the data entry position it is within 30 degrees of the horizontal plane and when the user interface is in the viewing position it is within 45 degrees of the vertical plane. The user interface is preferably located between the driver seat and the adjacent passenger seat. The user interface position selector may be configured to be settable to any of a plurality of settings between the first and second settings, where the plurality of settings corresponds to a plurality of user interface positions between the data entry position and the viewing position. The user interface positioning system may utilize an electro-mechanical positioning system and/or a hydraulic positioning system.

In one aspect, the user interface positioning system includes a linkage assembly, where the user interface is mounted within the vehicle's passenger cabin using the linkage assembly, and where the user interface positioning system utilizes the linkage assembly to adjust the user interface between at least the first user interface position and the second user interface position based on an input from the user interface position selector. The linkage assembly may include a plurality of linkage arms interposed between the user interface and at least one passenger cabin mounting structure; alternately, the linkage assembly may include a guide track mounted to a passenger cabin structure, where a link of the linkage assembly slides within the guide track, where a position of the link within the guide track is controlled by the user interface positioning system, and where the user interface positioning system positions the link of the linkage assembly within the guide track in order to adjust the user interface between at least the first and second user interface positions based on input from the user interface position selector; alternately, the linkage assembly may include a guide track mounted to a portion of the user interface, where the guide track moves about a pivot mounted to the vehicle, where a position of the guide track relative to the pivot is controlled by the user interface positioning system, and where the user interface positioning system positions the guide track relative to the pivot to adjust the user interface between at least the first and second user interface positions based on the input from the user interface position selector; alternately, the linkage assembly may include at least one link (which may be a telescoping link) that couples a user interface hinge mount to a passenger cabin hinge mount, where the user interface hinge mount is attached to a rear portion of the user interface and the passenger cabin hinge mount is fixed to the vehicle's passenger cabin.

According to the invention, the user interface position selector is comprised of a touch sensitive region extending over a portion of the user interface, where touching the touch sensitive region with a finger and moving the finger in a downward motion within the touch sensitive region causes the user interface positioning system to move the user interface in a first direction towards the data entry position, and where touching the touch sensitive region with a finger and moving the finger in an upward motion within the touch sensitive region causes the user interface positioning system to move the user interface in a second direction towards the viewing position. Preferably tapping the touch sensitive region with a finger causes the user interface positioning system to move the user interface to a corresponding position between the data entry position and the viewing position.

In another aspect, the user interface position selector may be comprised of a rotatable knob, a push button switch, a slide switch, a toggle switch and/or a touch sensitive region on the user interface.

In another aspect, the vehicle interface system may further include (i) a controller coupled to the user interface positioning system, and (ii) a vehicle status monitor coupled to the controller, where the vehicle status monitor outputs a first control signal when the vehicle is activated and/or placed into drive and where the vehicle status monitor outputs a second control signal when the vehicle is de-activated and/or placed into park, where the controller causes the user interface positioning system to place the user interface in the data entry position upon receipt of the first control signal and in the viewing position upon receipt of the second control signal.

A further understanding of the nature and advantages of the present invention may be realized by reference to the remaining portions of the specification and the drawings.

### BRIEF DESCRIPTION OF THE DRAWINGS

It should be understood that the accompanying figures are only meant to illustrate, not limit, the scope of the invention and should not be considered to be to scale. Additionally, the same reference label on different figures should be understood to refer to the same component or a component of similar functionality.
Fig. 1 provides a system level diagram of exemplary EV vehicle systems that may utilize the adjustable user interface of the invention;
Fig. 2 provides a similar system level diagram to that shown in Fig. 1, modified for an ICE-based vehicle;
Fig. 3 provides a perspective view of an embodiment of the invention with the touch screen user interface positioned in a lower, data entry position;
Fig. 4 provides a perspective view of the embodiment of the touch screen user interface shown in Fig. 3 positioned in an intermediate position;
Fig. 5 provides a perspective view of the embodiment of the touch screen user interface shown in Figs. 3 and 4, positioned in a raised, viewing position;
Figs. 6A-6C provide a side view of the touch screen user interface shown in Figs. 3-5;
Fig. 7 illustrates the positioning of the user interface to achieve optimum ergonomics;
Fig. 8 provides a perspective view of an alternate embodiment of the invention with the touch screen user interface positioned in a lower, data entry position;
Fig. 9 provides a perspective view of the embodiment of the touch screen user interface shown in Fig. 8, positioned in a raised, viewing position;
Fig. 10 provides a side view of the embodiment of the touch screen user interface shown in Figs. 8 and 9, positioned in a lowered position;
Fig. 11 provides a side view of the embodiment of the touch screen user interface shown in Figs. 8 and 9, positioned in a raised position;
Figs. 12A-12C provide a side view of an alternate touch screen user interface linkage assembly;
Figs. 13A-13C illustrate the configuration shown in Figs. 12A-12C with additional levels of motion;
Figs. 14A-14C provide a side view of an alternate touch screen user interface linkage assembly in which the interface display is hinged;
Figs. 15A-15C illustrate the configuration shown in Figs. 14A-14C modified to include a telescopic linkage arm;
Fig. 16 illustrates an interface position selector that utilizes a rotatable knob, where the knob is rotatable between a first position corresponding to the interface being located in the data entry position and a second position corresponding to the interface being located in the viewing position;
Fig. 17 illustrates an interface position selector that utilizes a rotatable knob, where the knob may be located at any of a plurality of positions between a first position corresponding to the interface being located in the data entry position and a second position corresponding to the interface being located in the viewing position;
Fig. 18 illustrates an interface position selector comprised of a pair of buttons where the first button causes the user interface to be placed in the data entry position and the second button causes the user interface to be placed in the viewing position;
Fig. 19 illustrates an interface position selector comprised of a pair of buttons where the first button causes the user interface to move upwards toward the viewing position and the second button causes the user interface to move downwards towards the data entry position;
Fig. 20 illustrates an interface position selector utilizing the touch screen, wherein if the user touches the interface near the bottom of the screen and flicks their finger in an upward direction the interface moves upward to the viewing position, and wherein if the user touches the interface near the top of the screen and flicks their finger in a downward direction the interface moves downward to the data entry position;
Fig. 21 illustrates a modification of the interface position selector of Fig. 20 in which the user interface is divided into zones, thereby allowing the user to select between at least three interface positions; and
Fig. 22 illustrates an interface position selector utilizing the touch screen in which a portion of the interface is used as a slider control to input the desired interface position.

### DESCRIPTION OF THE SPECIFIC EMBODIMENTS

The term "battery pack" as used herein refers to one or more batteries electrically interconnected to achieve the desired voltage and capacity. In the following text, the terms "electric vehicle" and "EV" may be used interchangeably and may refer to an all-electric vehicle, a plug-in hybrid vehicle, also referred to as a PHEV, or a hybrid vehicle, also referred to as a HEV, where a hybrid vehicle utilizes multiple sources of propulsion including an electric drive system.

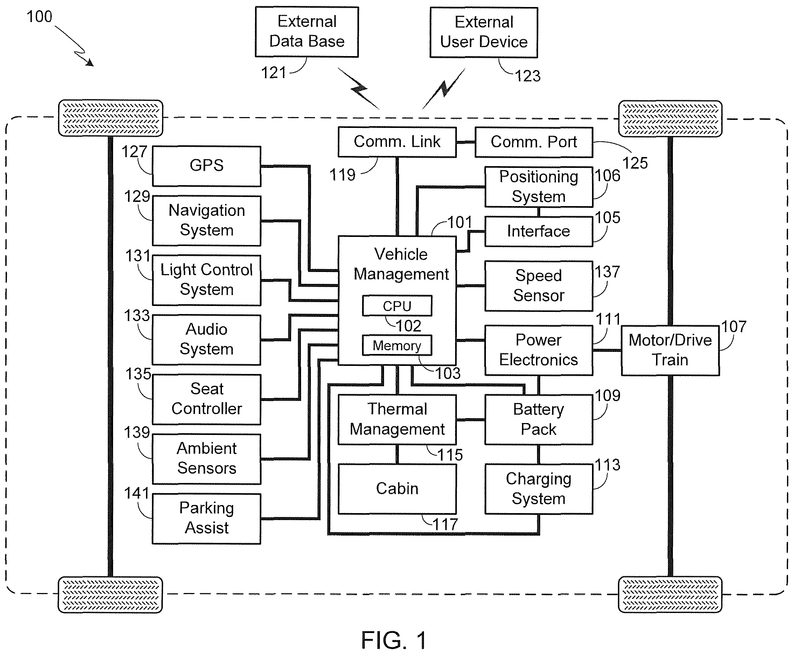

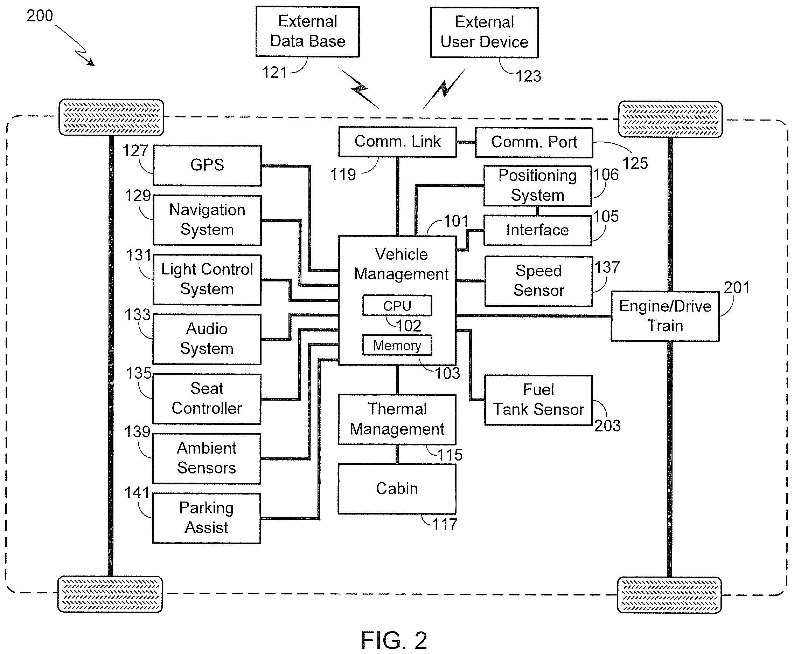

Fig. 1 is a high-level view of some of the primary systems of an EV 100, systems which may provide information to, and/or be controlled by, vehicle occupants via the user interface of the invention. As described in further detail below with reference to Fig. 2, the invention may also be used with a vehicle utilizing an internal combustion engine (ICE), either alone or in combination with an electric motor (i.e., a hybrid). It should be understood that the system configurations illustrated in Figs. 1 and 2 are but two possible configurations and that other configurations may be used while still retaining the functionality of the invention. Additionally, one or more of the elements shown in Figs. 1 and 2 can be grouped together in a single device, and/or circuit board, and/or integrated circuit.

EV 100 includes a vehicle system controller 101, also referred to herein as a vehicle management system. Controller 101 includes a central processing unit (CPU) 102 and a memory 103, with memory 103 being comprised of EPROM, EEPROM, flash memory, RAM, solid state drive, hard disk drive, or any other type of memory or combination of memory types. Controller 101 may also include a graphical processing unit (GPU), with the GPU being either separate from or contained on the same chip set as the CPU.

A touch screen user interface 105, described in detail below, is coupled to vehicle management system 101. Interface 105, which may use any of a variety of display technologies (e.g., light-emitting diode (LED), plasma, organic light-emitting diode (OLED), liquid crystal (LCD), thin film transistor LCD (TFT-LCD), field emission display (FED) or other technology), incorporates a touch sensitive screen technology (e.g., capacitive touch technology). Touch screen user interface 105 allows the driver, or a passenger, to interact with the vehicle management system, for example inputting data into the navigation system, altering the heating, ventilation and air condition (HVAC) system, controlling the vehicle's entertainment system (e.g., radio, CD/DVD player, etc.), adjusting vehicle settings (e.g., seat positions, light controls, etc.), and/or otherwise altering the functionality of EV 100. Touch screen user interface 105 also includes means for the vehicle management system to provide information to the driver and/or passenger, information such as a navigation map or driving instructions as well as the operating performance of any of a variety of vehicle systems (e.g., battery pack charge level for an EV, fuel level for an ICE-based vehicle, selected gear, current entertainment system settings such as volume level and selected track information, external light settings, current vehicle speed, current HVAC settings such as cabin temperature and/or fan settings, etc.). Touch screen user interface 105 may also be used to warn the driver of a vehicle condition (e.g., low battery charge level or low fuel level) and/or communicate an operating system malfunction (battery system not charging properly, low oil pressure for an ICE-based vehicle, low tire air pressure, etc.). It should be understood that while the focus of the present invention is on a touch screen user interface 105, typically the user interface of the vehicle will also include other displays (e.g., a centrally mounted speedometer or other gauge), physical switches (e.g., push-button switches, capacitive switches, slide or toggle switches), and system warning indicators (e.g., audible or visible warning signals).

EV 100 includes one or more motors 107 that provide vehicle propulsion. Motor(s) 107 may be mechanically coupled to the front axle/wheels, the rear axle/wheels, or both, and may utilize any of a variety of transmission types (e.g., single speed, multi-speed) and differential types (e.g., open, locked, limited slip). Battery pack 109, which may be comprised of one or hundreds or thousands of rechargeable batteries, supplies the power necessary for operation of motor(s) 107. Additionally, battery pack 109 may provide the power necessary for the various vehicle systems that require electrical power (e.g., lights, entertainment system, navigation system, etc.). Typically battery pack 109 is coupled to motor(s) 107 via a power control system 111 that insures that the power delivered to the drive motor is of the proper form (e.g., correct voltage, current, waveform, etc.).

Battery pack 109 is charged by charging system 113. Charging system 113 may either be integrated into EV 100 as shown, or be comprised of an external charging system. Typically charging system 113 is configured to be electrically connected to an external power source, not shown, such as the municipal power grid. Battery pack 109 may also be charged, at least in part, using an on-board system such as a regenerative braking system.

EV 100 also includes a thermal management system 115. Thermal management system 115, which includes both a heating subsystem and a cooling subsystem, is used to insure that the batteries within battery pack 109 are maintained within the desired operating, charging and/or storage temperature range. Preferably thermal management system 115 is also coupled to the passenger cabin HVAC system 117.

Coupled to vehicle management system 101 is a communication link 119. Communication link 119 may be used to wirelessly obtain configuration updates or other information from external data sources 121 (e.g., manufacturer, dealer, service center, web-based application, remote home-based system, third party source, etc.) using any of a variety of different technologies (e.g., GSM, EDGE, UMTS, CDMA, DECT, WiFi, WiMax, etc.). Communication link 119 may also be used to wirelessly couple the system to a user device 123 (e.g., a cell phone, MP3 player, etc.). In some embodiments, communication link 119 also includes an on-board port 125, such as a USB, Thunderbolt, or other port, in order to couple an external device (e.g., cell phone, MP3 player, data source, test system) over a wired communication link, thus allowing system updates or other information to be supplied to the vehicle management system 101.

In addition to vehicle propulsion and related systems, vehicle 100 includes multiple secondary systems that are coupled to vehicle management system 101. User interface 105, which is also coupled to vehicle management system 101, may be used to obtain the status of various aspects of these systems and, in at least some instances, provide the user with a means for making system adjustments. Exemplary secondary systems include a global positioning system (GPS) 127, navigation system 129, light control system 131 (e.g., external vehicle lights, cabin lighting, fog lights, etc.), entertainment system 133 (e.g., MP3 player, CD/DVD player, SAT receiver, etc.), seat positioning controller 135, vehicle speed sensor 137, ambient environment sensors 139 (e.g., precipitation, temperature, light level, etc.), and parking assist sensors 141. It should be understood that the systems listed above are only meant to illustrate appropriate systems that may be coupled to user interface 105 via vehicle management system 101, and as such is not meant to provide an exhaustive listing of all the vehicle and auxiliary subsystems that may be monitored by, or controlled by, user interface 105.

Fig. 2 provides a high-level view of a second vehicle configuration, integrated into an ICE-based vehicle, suitable for use with the adjustable user interface. As shown, motor 107 of vehicle 100 is replaced in vehicle 200 with engine 201. Due to the use of engine 201, vehicle 200 does not include battery pack 109, power electronics subsystem 111 or charging system 113. As opposed to monitoring the battery pack, in vehicle 200 vehicle management system 101 monitors fuel tank 203. It will be appreciated that the invention is equally applicable to a hybrid vehicle.

In accordance with the present invention, the position of touch screen user interface 105 is adjustable between at least two positions and more preferably adjustable over a range of positions. By allowing the user the ability to adjust the position of interface 105, the user can optimize screen placement for either data entry or viewing. Additionally, the screen position can be optimized for the user's seating position, thus allowing easy access regardless of seat position. As a result, when the screen is being used for viewing, for example when the screen is being used with navigation system 129, the user can easily see the screen without having to look downward or dramatically alter their viewing angle. Similarly, when the screen is being used for data entry, for example to input data into navigation system 129 or make adjustments to audio system 133, the screen can be positioned so that the user can easily reach the entire screen without straining, thereby helping to avoid neck, shoulder and/or back pain.

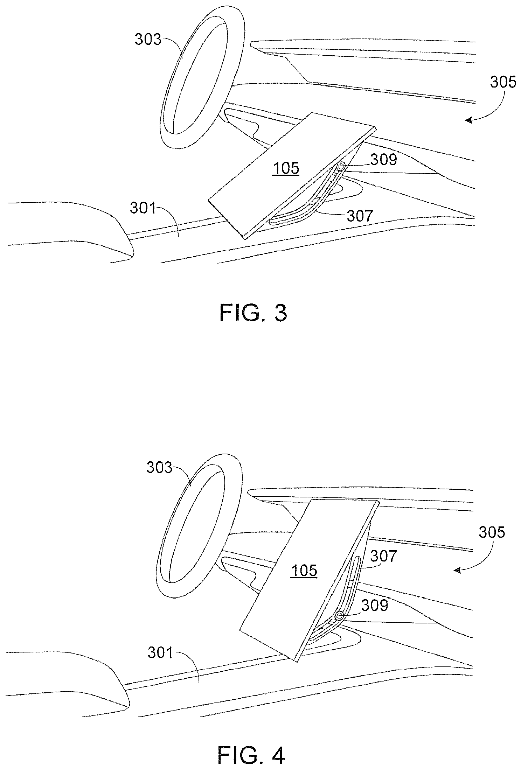

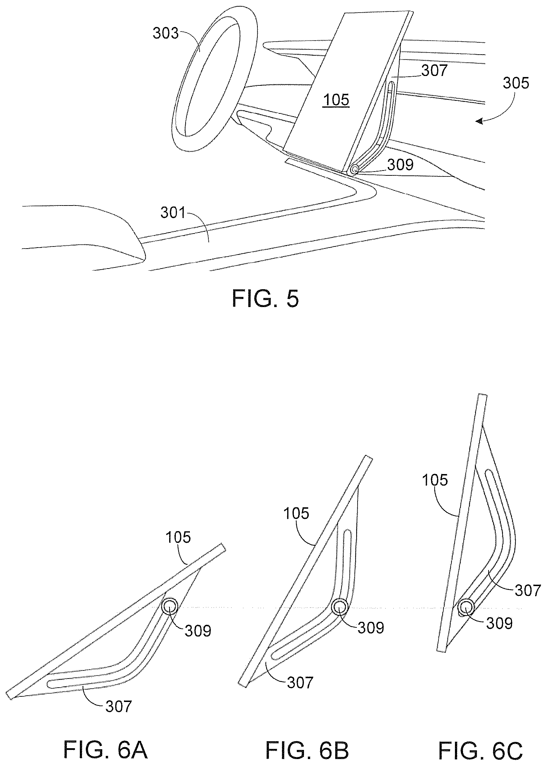

Figs. 3-5 illustrate a preferred embodiment of the invention, these views providing a perspective view of touch screen user interface 105 located in various positions within the passenger cabin of a vehicle. In order to provide locational context for interface 105, also visible in Figs. 3-5 is an exemplary center console 301, steering wheel 303 and dash 305. For further clarity, Figs. 6A-6C provide a side view of interface 105 that illustrate the interface's range of motion.

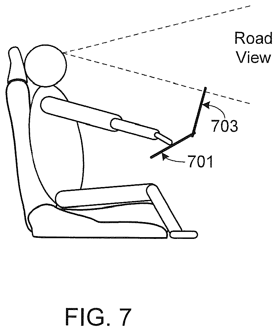

As shown in the figures, preferably touch screen user interface is centrally located between the left front and right front seats, thus allowing access to the interface by either the driver or the passenger. In some embodiments the interface may be angled towards the driver, and/or positioned closer to the driver's side of the vehicle, thus providing improved driver access to the interface. It should be understood that the embodiment illustrated in Figs. 3-6 is only meant as an exemplary embodiment, and that variations of this embodiment are clearly envisioned by the inventor. For example, although display 105 preferably has a screen size in the range of 15-19 inches (e.g., measured diagonally), the screen may fall outside of this range (either smaller or larger). Similarly, the touch screen interface may have a different range of motion than shown, for example lying in a more horizontal plane when in the data entry position and/or in a more vertical plane when in the viewing position. In at least one embodiment, touch screen 105 is positioned within 30 degrees of the horizontal plane when in the data entry position, and positioned within 45 degrees of the vertical plane when in the viewing position. Preferably the range of motion used for a particular configuration of interface 105 is based on the ergonomics of the vehicle into which it is to be integrated, thus insuring that in the data entry position (see interface position 701 in Fig. 7) the touch screen is in a natural location for use by the driver and that in the viewing position (see interface position 703 in Fig. 7) the touch screen is optimized to provide easy viewing while minimally affecting the driver's view of the road and the ambient environment.

In the embodiment illustrated in Figs. 3-6, user interface 105 includes one or more guide tracks 307 that allow the interface to pivot about pivot axis 309. The position of user interface 105 may be adjusted manually, for example by gripping the interface (or gripping a handle or handles coupled to the interface) and moving interface 105 to the desired location. In the preferred embodiment, however, the system allows the user to quickly and easily re-position interface 105 using a mechanical, electro-mechanical, or hydraulic positioning system 106 that is coupled to the interface 105 and the interface linkage.

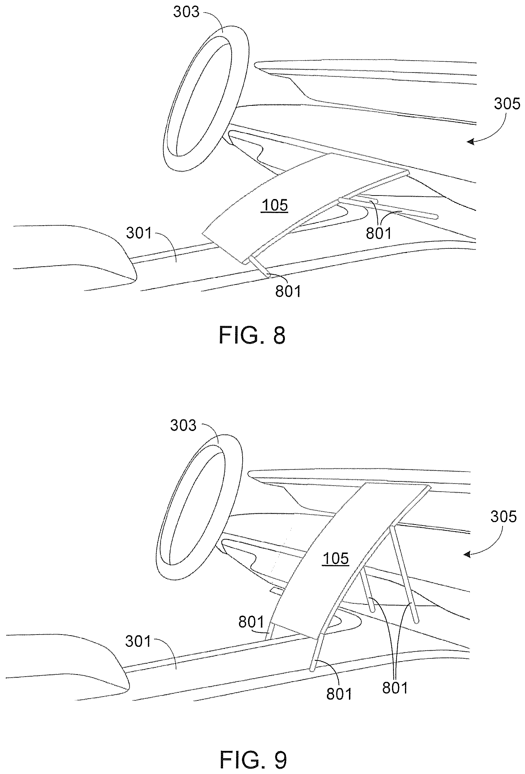

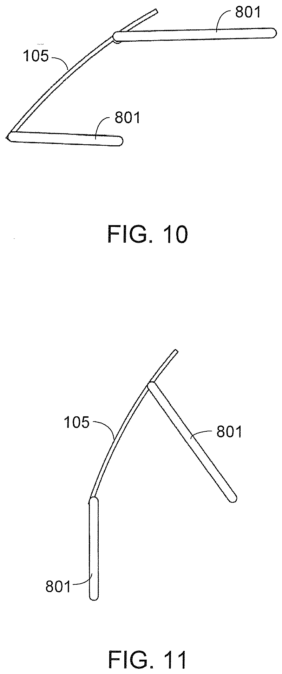

Although the approach of using a guide track mounted to the rear portion of interface 105 is preferred as it is easily implemented and provides a stable positioning system, it should be understood that other tracking and linkage assemblies may be used to provide the desired range of motion for touch screen user interface 105. For example, in the alternate preferred embodiment shown in Figs. 8-11 a multi-arm assembly, also referred to herein as a multi-link assembly, is used to provide the desired range of interface motion. Preferably the multi-arm assembly utilizes two pair of arms, an upper pair and a lower pair, thereby providing sufficient strength to stably support interface 105. Figs. 10 and 11 provide a side view of the interface assembly shown in Figs. 8 and 9, these figures illustrating both lowered (Fig. 10) and a raised (Fig. 11) interface positions. As in the previously described embodiment, the system may be configured to allow the position of interface 105 to be adjusted manually or configured to use a mechanical, electro-mechanical, or hydraulic positioning system 106 that is coupled to the multi-link assembly. Note that in the embodiment illustrated in Figs. 8-11 interface 105 has a curved face. It should be understood, however, that the invention is equally applicable to flat and non-flat interface screens.

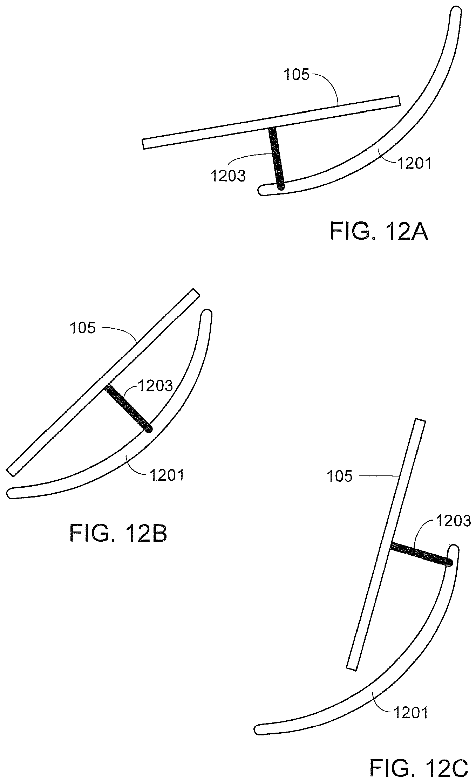

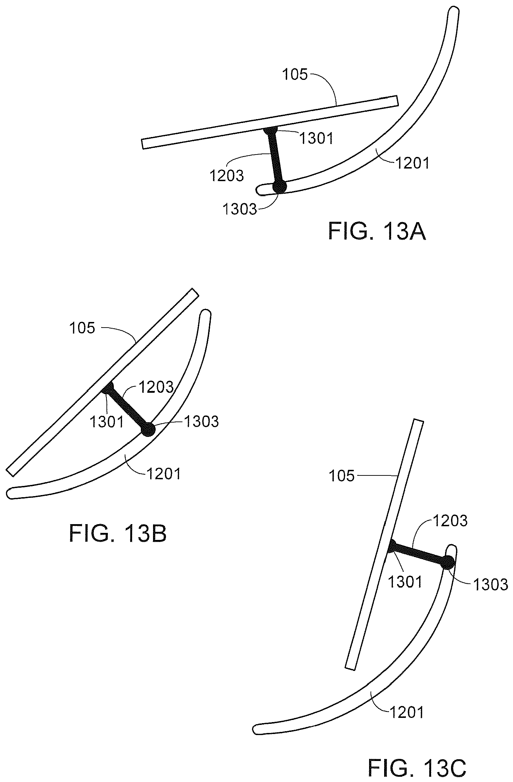

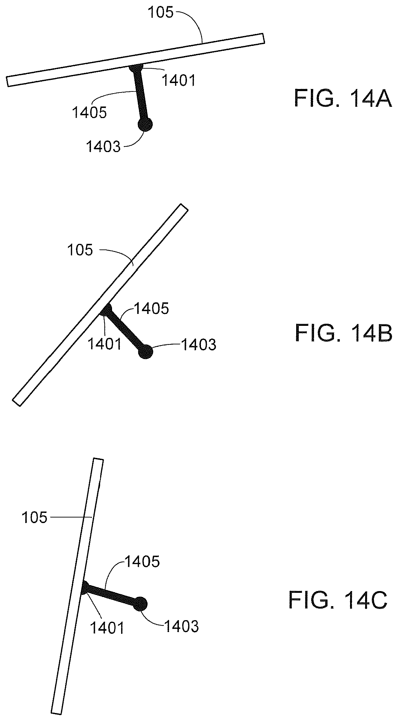

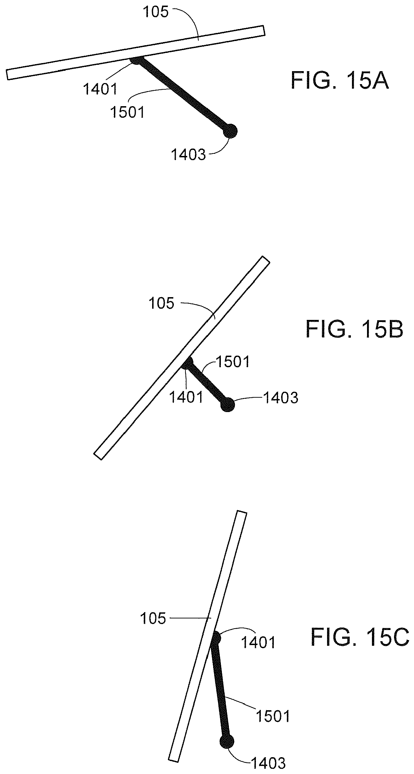

Figs. 12A-12C illustrate yet another embodiment of the invention. In this embodiment a guide track 1201 is integrated into the center console as well as a portion of the dashboard. User interface 105 is coupled to guide track 1201 via a linkage arm (or arms) 1203. As linkage arm(s) 1203 moves within guide track 1201, interface 105 is moved between a data entry position (Fig. 12A) and an interface viewing position (Fig. 12C). If desired, and as illustrated in Figs. 13A-13C, interface 105 may be configured to allow it to pivot about linkage arm 1203 at axis 1301, and/or linkage arm 1203 may be configured to allow it to pivot about guide track 1201 at axis 1303, thereby providing additional freedom of motion for the interface. Figs. 14A-14C illustrate another linkage assembly in which user interface 105 pivots about axes 1401 and 1403 using a pair of hinge mounts located on either end of linkage arm 1405, thereby providing interface motion without the need for a guide track. In general, however, the inventor has found that for most vehicle configurations the embodiment shown in Figs. 14A-14C does not provide the desired level of interface motion. This limitation of the embodiment of Figs. 14A-14C is alleviated in the embodiment shown in Figs. 15A-15C in which linkage arm 1405 is replaced with a telescopic linkage arm 1501. Telescopic linkage arm 1501 allows the separation distance between the interface and the vehicle console to be adjusted, thereby dramatically improving upon the range of achievable motion.

In at least one embodiment, vehicle management system 101 is configured to automatically relocate user interface 105 to a preset location when the vehicle is placed into 'park'; alternately, when the vehicle is turned 'off'. Similarly, vehicle management system 101 may be configured to automatically relocate user interface 105 to a second preset location when the vehicle is first placed into drive; alternately, when the vehicle is initially turned 'on'. The first interface preset position may be selected to minimize the risk of the display being damaged as vehicle occupants either enter, or exit, the passenger cabin. Accordingly, the first preset position may correspond to the upper, viewing position. The second interface preset position may be selected to allow immediate data entry upon starting the car and as such, the second preset position may correspond to the lower, data entry position. The preset interface positions may be preset by the vehicle's manufacturer. Alternately, the system may be configured to allow selection of the preset positions by either the end user or a third party.

As previously noted, although the system of the invention may be configured to allow manual positioning of the user interface, preferably a positioning system 106 is used, thereby simplifying interface placement. Positioning system 106 may utilize an electro-mechanical (e.g., motorized) positioner, a hydraulic positioner or other positioning system to adjust and control the viewing position of user interface 105. In some configurations of the invention, positioning system 106 only provides two positions for interface 105; a lower, data entry position and an upper, display viewing position. In an alternate configuration, positioning system 106 provides for multiple positions, including the lower, data entry position, the upper, display viewing position, and one or more positions there between.

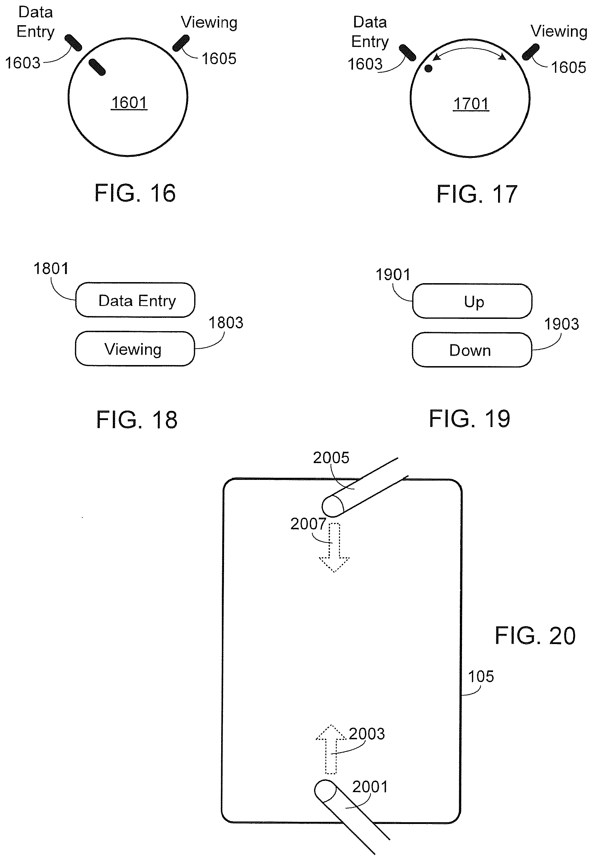

It will be appreciated that there are a variety of input devices that may be used in conjunction with the vehicle management system 101 and the interface positioning system 106 that allow a user to select the desired interface position. Appropriate selection devices that are not according to the present invention include, but are not limited to, slide controllers, push buttons, rotating switches, and touch screen buttons and sliders. Exemplary selection devices are illustrated in Figs. 16-22 and described in detail below.

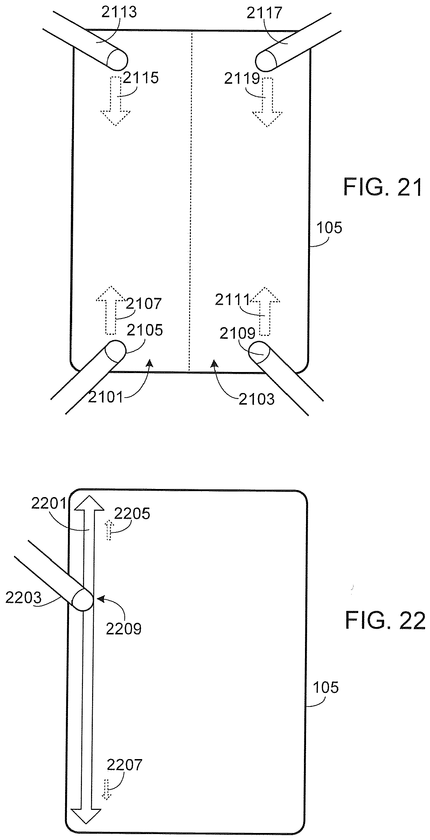

Fig. 16 illustrates an interface position selector not according to the invention that utilizes a rotatable knob 1601. In this configuration, knob 1601 may be rotated between a first position 1603, corresponding to an interface data entry position, and a second position 1605, corresponding to an interface viewing position. Fig. 17 illustrates a modification of this input device not according to the invention, where the rotatable knob 1701 may be located at any position between position 1703 and 1705, resulting in the user interface being placed at a corresponding location between the data entry position and the viewing position. Fig. 18 illustrates an alternate input device not according to the invention comprised of a pair of buttons 1801 and 1803, activation of the first button 1801 causing the user interface to be placed in the data entry position and activation of the second button 1803 causing the user interface to be placed in the viewing position. Buttons 1801/1803 may be physical buttons, for example buttons mounted on the dash board or the central console, or buttons 1801/1803 may be touch sensitive buttons, e.g., regions displayed on user interface 105. Fig. 19 illustrates a modification of the input device shown in Fig. 18, where buttons 1901/1903 cause the user interface to move in the corresponding direction, e.g., upwards toward the viewing position when button 1901 is pressed (or otherwise activated) and downwards towards the data entry position when button 1903 is pressed (or otherwise activated). As in the prior embodiment, buttons 1901/1903 may be physical buttons or touch sensitive buttons displayed on user interface 105. Fig. 20 illustrates the technique for selecting interface position according to the present invention. In this approach, when the user touches interface 105 near the bottom of the screen and flicks their finger 2001 in an upward direction 2003, user interface 105 moves upward to the viewing position. Similarly, when the user touches interface 105 near the top of the screen and flicks their finger 2005 in a downward direction 2007, user interface 105 moves downward to the data entry position. Fig. 21 illustrates a technique similar to that shown in Fig. 20, but modified to allow more than just two interface positions to be selected, i.e., the data entry and viewing positions. In Fig. 21 user interface 105 is divided into two zones, 2101 and 2103, although it will be understood that the interface may be divided into more than two zones if additional interface positions are desired. In this embodiment when the user touches interface 105 near the bottom of the screen within zone 2101 and flicks their finger 2105 in an upward direction 2107, user interface 105 moves upward to the viewing position. If the user flicks their finger 2109 in an upward direction 2111 from within zone 2103, then user interface 105 only moves to an intermediate position between the data entry and the viewing positions. Similarly, when the user touches interface 105 near the top of the screen within zone 2101 and flicks their finger 2113 in a downward direction 2115, user interface 105 moves downward to the data entry position. If the user flicks their finger 2117 in a downward direction 2119 from within zone 2103, then user interface 105 moves to the intermediate position. In yet another approach, and as illustrated in Fig. 22, a portion 2201 of interface 105 is used as a slider control to input the desired interface position. To adjust the position, the user presses their finger 2203 on zone 2201 and moves their finger 2203 upwards (direction 2205) or downwards (direction 2207) to move the user interface 105 upwards or downwards to the extent desired. Alternately, the user can tap a location on zone 2201, causing the user interface 105 to move to a corresponding position, e.g., a tap two thirds of the way towards the top of zone 2201 (region 2209) would cause the user interface to move two thirds of the way towards the raised, viewing position.

## Claims

1. A vehicle interface system, comprising:
a user interface (105) mounted within a passenger cabin of a vehicle (100), wherein said user interface (105) is a touch screen, and wherein said user interface (105) is adjacent to a driver seat of said vehicle (100); and
a user interface positioning system (106) coupled to said user interface (105), wherein said user interface positioning system (106) is adjustable between at least a first user interface position (701) and a second user interface position (703), wherein said user interface (105) in said first user interface position (701) corresponds to a data entry position, wherein said user interface (105) in said second user interface position (703) corresponds to a viewing position, wherein said user interface (105) in said data entry position (701) is closer to said driver seat than when said user interface (105) is in said viewing position (703), and wherein said user interface (105) in said viewing position (703) is closer to a vehicle front windshield than when said user interface (105) is in said data entry position (701),
**characterized in that**
said user interface (105) in said data entry position (701) is lower within said passenger cabin than when said user interface (105) is in said viewing position (703), wherein said user interface (105) further comprises a touch sensitive region extending over a portion of said user interface (105), wherein touching said touch sensitive region with a finger and moving said finger in a downward motion within said touch sensitive region causes said user interface positioning system (106) to move said user interface (105) in a first direction towards said data entry position (701), and wherein touching said touch sensitive region with said finger and moving said finger in an upward motion within said touch sensitive region causes said user interface positioning system (106) to move said user interface (105) in a second direction towards said viewing position.

2. The vehicle interface system of claim 1, said user interface positioning system (106) further comprising a linkage assembly, wherein said user interface (105) is mounted within said passenger cabin of said vehicle (100) with said linkage assembly, and wherein said user interface positioning system (106) utilizes said linkage assembly to adjust said user interface (105) between at least said first user interface position (701) and said second user interface position (703) based on an input from said touch sensitive region.

3. The vehicle interface system of claim 2, said linkage assembly further comprising a plurality of linkage arms (801) interposed between said user interface (105) and at least one passenger cabin mounting structure.

4. The vehicle interface system of claim 2, said linkage assembly further comprising a guide track (1201) mounted to a passenger cabin structure, wherein a link (1203) of said linkage assembly slides within said guide track (1201), wherein a position of said link (1203) within said guide track (1201) is controlled by said user interface positioning system (106), and wherein said user interface positioning system (106) positions said link (1203) of said linkage assembly within said guide track (1201) to adjust said user interface (105) between at least said first user interface position (701) and said second user interface position (703) based on said input from said touch sensitive region.

5. The vehicle interface system of claim 2, said linkage assembly further comprising a guide track (307) mounted to a portion of said user interface (105), wherein said guide track (307) moves about a pivot (309) mounted to said vehicle (100), wherein a position of said guide track (307) relative to said pivot (309) is controlled by said user interface positioning system (106), and wherein said user interface positioning system (106) positions said guide track (307) relative to said pivot (309) to adjust said user interface (105) between at least said first user interface position (701) and said second user interface position (703) based on said input from said touch sensitive region.

6. The vehicle interface system of claim 2, said linkage assembly further comprising at least one link (1405) coupling a user interface hinge mount to a passenger cabin hinge mount, wherein said user interface hinge mount is attached to a rear portion of said user interface (105), and wherein said passenger cabin hinge mount is fixed to said passenger cabin of said vehicle (100).

7. The vehicle interface system of claim 6, said at least one link further comprising a telescoping link (1501), wherein a link length corresponding to said telescoping link (1501) is controlled by said user interface positioning system (106).

8. The vehicle interface system of any one of claims 1-7, wherein said user interface (105) is positioned within 30 degrees of a horizontal plane when said user interface is in said data entry position (701), wherein said user interface (105) is positioned within 45 degrees of a vertical plane when said user interface is in said viewing position (703), and wherein said user interface (105) is located between said driver seat and an adjacent passenger seat.

9. The vehicle interface system of any one of claims 1-8, said user interface positioning system (106) further comprising at least one of an electro-mechanical positioning system and a hydraulic positioning system.

10. The vehicle interface system of any one of claims 1-9, further comprising:
a controller (101) coupled to said user interface positioning system (106); and
a vehicle status monitor coupled to said controller (101), wherein said vehicle status monitor outputs a first control signal when said vehicle (100) is activated and/or placed into drive, wherein said vehicle status monitor outputs a second control signal when said vehicle (100) is de-activated and/or placed into park, wherein said controller (101) causes said user interface positioning system (106) to place said user interface (105) in said data entry position (701) upon receipt of said first control signal, and wherein said controller (101) causes said user interface positioning system (106) to place said user interface (105) in said viewing position (703) upon receipt of said second control signal.

11. The vehicle interface system of any one of claims 1-10, wherein tapping said touch sensitive region with said finger causes said user interface positioning system (106) to move said user interface to a corresponding position between said data entry position (701) and said viewing position (703).

## Patentansprüche

1. Fahrzeugschnittstellensystem mit:
einer Benutzerschnittstelle (105), die innerhalb eines Fahrgastraums eines Fahrzeugs (100) angebracht ist, wobei die Benutzerschnittstelle (105) ein berührungsempfindlicher Bildschirm ist, und wobei sich die Benutzerschnittstelle (105) neben einem Fahrersitz des Fahrzeugs (100) befindet; und
einem Benutzerschnittstellenpositionierungssystem (106), das mit der Benutzerschnittstelle (105) gekoppelt ist, wobei das Benutzerschnittstellenpositionierungssystem (106) zwischen zumindest einer ersten Benutzerschnittstellenposition (701) und einer zweiten Benutzerschnittstellenposition (703) einstellbar ist, wobei die Benutzerschnittstelle (105) in der ersten Benutzerschnittstellenposition (701) einer Dateneingabeposition entspricht, wobei die Benutzerschnittstelle (105) in der zweiten Benutzerschnittstellenposition (703) einer Anzeigeposition entspricht, wobei die Benutzerschnittstelle (105) in der Dateneingabeposition näher an dem Fahrersitz angeordnet ist, als wenn sich die Benutzerschnittstelle (105) in der Anzeigeposition (703) befindet, und wobei die Benutzerschnittstelle (105) in der Anzeigeposition (703) näher an einer vorderen Fahrzeugwindschutzscheibe angeordnet ist, als wenn sich die Benutzerschnittstelle (105) in der Dateneingabeposition (701) befindet,
**dadurch gekennzeichnet, dass**
die Benutzerschnittstelle (105) in der Dateneingabeposition (701) niedriger innerhalb des Fahrgastraumes angeordnet ist, als wenn sich die Benutzerschnittstelle (105) in der Anzeigeposition (703) befindet, wobei die Benutzerschnittstelle ferner einen sich über einen Abschnitt der Benutzerschnittstelle (105) erstreckenden berührungsempfindlichen Bereich aufweist, wobei ein Berühren des berührungsempfindlichen Bereichs mit einem Finger und ein Bewegen des Fingers in einer abwärts gerichteten Bewegung innerhalb des berührungsempfindlichen Bereichs das Benutzerschnittstellenpositionierungssystem (106) veranlasst, die Benutzerschnittstelle (105) in einer ersten Richtung zu der Dateneingabeposition (701) zu bewegen, und wobei ein Berühren des berührungsempfindlichen Bereichs mit dem Finger und ein Bewegen des Fingers in einer aufwärts gerichteten Bewegung innerhalb des berührungsempfindlichen Bereichs das Benutzerschnittstellenpositionierungssystem (106) veranlasst, die Benutzerschnittstelle (105) in einer zweiten Richtung zu der Anzeigeposition zu bewegen.

2. Fahrzeugschnittstellensystem nach Anspruch 1, wobei das Benutzerschnittstellenpositionierungssystem (106) ferner eine Gelenkanordnung umfasst, wobei die Benutzerschnittstelle (105) mittels der Gelenkanordnung innerhalb des Fahrgastraums des Fahrzeugs (100) angebracht ist, und wobei das Benutzerschnittstellenpositionierungssystem (106) die Gelenkanordnung zum Einstellen der Benutzerschnittstelle (105) zwischen zumindest der ersten Benutzerschnittstellenposition (701) und der zweiten Benutzerschnittstellenposition (703) basierend auf einer Eingabe von dem berührungsempfindlichen Bereich verwendet.

3. Fahrzeugschnittstellensystem nach Anspruch 2, wobei die Gelenkanordnung ferner eine Vielzahl von Gelenkarmen (801) umfasst, die zwischen der Benutzerschnittstelle (105) und zumindest einer Fahrgastraumbefestigungsstruktur angeordnet sind.

4. Fahrzeugschnittstellensystem nach Anspruch 2, wobei die Gelenkanordnung ferner eine an einer Fahrgastraumstruktur befestigte Führungsschiene (1201) umfasst, wobei ein Verbindungselement (1203) der Gelenkanordnung innerhalb der Führungsschiene (1201) gleitet, wobei eine Position des Verbindungselements (1203) innerhalb der Führungsschiene (1201) durch das Benutzerschnittstellenpositionierungssystem (106) gesteuert ist, und wobei das Benutzerschnittstellenpositionierungssystem (106) das Verbindungselement (1203) der Gelenkanordnung innerhalb der Führungsschiene (1201) positioniert, um die Benutzerschnittstelle (105) zwischen zumindest der ersten Benutzerschnittstellenposition (701) und der zweiten Benutzerschnittstellenposition (703) basierend auf der Eingabe von dem berührungsempfindlichen Bereich einzustellen.

5. Fahrzeugschnittstellensystem nach Anspruch 2, wobei die Gelenkanordnung ferner eine an einem Abschnitt der Benutzerschnittstelle (105) befestigte Führungsschiene (307) umfasst, wobei sich die Führungsschiene (307) um einen an dem Fahrzeug (100) befestigten Drehpunkt (309) bewegt, wobei eine Position der Führungsschiene (307) relativ zu dem Drehpunkt (309) durch das Benutzerschnittstellenpositionierungssystem (106) gesteuert ist, und wobei das Benutzerschnittstellenpositionierungssystem (106) die Führungsschiene (307) relativ zu dem Drehpunkt (309) positioniert, um die Benutzerschnittstelle (105) zwischen zumindest der ersten Benutzerschnittstellenposition (701) und der zweiten Benutzerschnittstellenposition (703) basierend auf der Eingabe von dem berührungsempfindlichen Bereich einzustellen.

6. Fahrzeugschnittstellensystem nach Anspruch 2, wobei die Gelenkanordnung ferner zumindest ein Verbindungselement (1405) umfasst, das eine Benutzerschnittstellengelenkbefestigung mit einer Fahrgastraumgelenkbefestigung koppelt, wobei die Benutzerschnittstellengelenkbefestigung an einem rückseitigen Abschnitt der Benutzerschnittstelle (105) befestigt ist, und wobei die Fahrgastraumgelenkbefestigung an dem Fahrgastraum des Fahrzeugs (100) befestigt ist.

7. Fahrzeugschnittstellensystem nach Anspruch 6, wobei das zumindest eine Verbindungselement ferner ein teleskopartiges Verbindungsglied (1501) umfasst, wobei eine dem teleskopartigen Verbindungsglied (1501) entsprechende Verbindungslänge durch das Benutzerschnittstellenpositionierungssystem (106) gesteuert ist.

8. Fahrzeugschnittstellensystem nach einem der Ansprüche 1-7, wobei die Benutzerschnittstelle (105) innerhalb von 30° zu einer horizontalen Ebene positioniert ist, wenn sich die Benutzerschnittstelle in der Dateneingabeposition (701) befindet, wobei die Benutzerschnittstelle (105) innerhalb von 45° zu einer vertikalen Ebene positioniert ist, wenn sich die Benutzerschnittstelle in der Anzeigeposition (703) befindet, und wobei sich die Benutzerschnittstelle (105) zwischen dem Fahrersitz und einem Beifahrersitz befindet.

9. Fahrzeugschnittstellensystem nach einem der Ansprüche 1-8, wobei das Benutzerschnittstellenpositionierungssystem (106) ferner zumindest eines aus einem elektromechanischen Positionierungssystem und einem hydraulischen Positionierungssystem umfasst.

10. Fahrzeugschnittstellensystem nach einem der Ansprüche 1-9, ferner umfassend:
eine mit dem Benutzerschnittstellenpositionierungssystem (106) gekoppelte Steuerung (101); und
einen mit der Steuerung (101) gekoppelten Fahrzeugstatusmonitor, wobei der Fahrzeugstatusmonitor ein erstes Steuersignal ausgibt, wenn das Fahrzeug (100) aktiviert ist und/oder in einen Fahrmodus versetzt ist, wobei der Fahrzeugstatusmonitor ein zweites Steuersignal ausgibt, wenn das Fahrzeug (100) deaktiviert ist und/oder in einen Parkmodus versetzt ist, wobei die Steuerung (101) das Benutzerschnittstellenpositionierungssystem (106) beim Empfang des ersten Steuersignals veranlasst, die Benutzerschnittstelle (105) in die Dateneingabeposition (701) zu versetzen, und wobei die Steuerung (101) das Benutzerschnittstellenpositionierungssystem (106) beim Empfang des zweiten Steuersignals veranlasst, die Benutzerschnittstelle (105) in die Anzeigeposition (703) zu versetzen.

11. Fahrzeugschnittstellensystem nach einem der Ansprüche 1-10, wobei ein Antippen des berührungsempfindlichen Bereichs mit dem Finger das Benutzerschnittstellenpositionierungssystem (106) veranlasst, die Benutzerschnittstelle in eine entsprechende Position zwischen der Dateneingabeposition (701) und der Anzeigeposition (703) zu bewegen.

## Revendications

1. Système d'interface de véhicule, comprenant:
une interface utilisateur (105) montée dans une cabine de passagers d'un véhicule (100), dans laquelle ladite interface utilisateur (105) est un écran tactile, et dans laquelle ladite interface utilisateur (105) est adjacente à un siège de conducteur dudit véhicule (100); et
un système de positionnement d'interface utilisateur (106) couplé à ladite interface utilisateur (105), dans lequel ledit système de positionnement d'interface utilisateur (106) est réglable entre au moins une première position d'interface utilisateur (701) et une deuxième position d'interface utilisateur (703), dans lequel ladite interface utilisateur (105) dans ladite première position d'interface utilisateur (701) correspond à une position d'entrée de données, dans lequel ladite interface utilisateur (105) dans ladite deuxième position d'interface utilisateur (703) correspond à une position de visualisation, dans lequel ladite interface utilisateur (105) dans ladite position d'entrée de données (701) est plus proche dudit siège du conducteur que lorsque ladite interface utilisateur (105) est dans ladite position de visualisation (703), et dans lequel ladite interface utilisateur (105) dans ladite position de visualisation (703) est plus proche d'un pare-brise avant de véhicule que lorsque ladite interface utilisateur (105) est dans ladite position d'entrée de données (701),
**caractérise en ce que**
ladite interface utilisateur (105) dans ladite position d'entrée de données (701) est plus basse dans ladite cabine passagers que lorsque ladite interface utilisateur (105) est dans ladite position de visualisation (703), dans laquelle ladite interface utilisateur (105) comprend en outre une zone tactile s'étendant sur une partie de ladite interface utilisateur (105), dans laquelle toucher ladite zone tactile avec un doigt et déplacer ledit doigt dans un mouvement descendant dans ladite zone tactile provoque ledit système de positionnement d'interface utilisateur (106) à déplacer ledit interface utilisateur (105) dans une première direction vers ladite position d'entrée de données (701), et dans laquelle toucher ladite zone tactile avec ledit doigt et déplacer ledit doigt dans un mouvement ascendant dans ladite zone tactile provoque ledit système de positionnement d'interface utilisateur (106) à déplacer ladite interface utilisateur (105) dans une deuxième direction vers ladite position de visualisation.

2. Le système d'interface de véhicule selon la revendication 1, ledit système de positionnement d'interface utilisateur (106) comprenant en outre un ensemble de liaison, dans lequel ladite interface utilisateur (105) est montée dans ladite cabine de passagers dudit véhicule (100) avec ledit ensemble de liaison, et dans lequel ledit système de positionnement d'interface utilisateur (106) utilise ledit ensemble de liaison pour ajuster ladite interface utilisateur (105) entre au moins ladite première position d'interface utilisateur (701) et ladite deuxième position d'interface utilisateur (703) sur la base d'une entrée de ladite zone tactile.

3. Le système d'interface de véhicule selon la revendication 2, ledit ensemble de liaison comprenant en outre une pluralité de bras de liaison (801) interposés entre ladite interface utilisateur (105) et au moins une structure de montage de cabine de passagers.

4. Le système d'interface de véhicule selon la revendication 2, ledit ensemble de liaison comprenant en outre une piste de guidage (1201) montée sur une structure de cabine de passagers, dans laquelle une liaison (1203) dudit ensemble de liaison glisse dans ladite piste de guidage (1201), dans laquelle une position dudit liaison (1203) dans ladite piste de guidage (1201) est contrôlée par ledit système de positionnement d'interface utilisateur (106), et dans laquelle ledit système de positionnement d'interface utilisateur (106) positionne ladite liaison (1203) dudit ensemble de liaison dans ladite piste de guidage (1201) pour ajuster ladite interface utilisateur (105) entre au moins ladite première position d'interface utilisateur (701) et ladite deuxième position d'interface utilisateur (703) sur la base de ladite entrée de ladite zone tactile.

5. Le système d'interface de véhicule selon la revendication 2, ledit ensemble de liaison comprenant en outre une piste de guidage (307) montée sur une partie de ladite interface utilisateur (105), dans laquelle ladite piste de guidage (307) se déplace autour d'un pivot (309) monté sur ledit véhicule (100), dans lequel une position de ladite piste de guidage (307) par rapport audit pivot (309) est commandé par ledit système de positionnement d'interface utilisateur (106), et dans laquelle ledit système de positionnement d'interface utilisateur (106) positionne ladite piste de guidage (307) par rapport audit pivot (309) pour ajuster ladite interface utilisateur (105) entre au moins ladite première position d'interface utilisateur (701) et ladite deuxième position d'interface utilisateur (703) sur la base de ladite entrée de ladite zone tactile.

6. Le système d'interface de véhicule selon la revendication 2, ledit ensemble de liaison comprenant en outre au moins une liaison (1405) couplant un bâti articulé de l'interface utilisateur à un bâti articulé du cabine de passager, dans laquelle ledit bâti articulé de l'interface utilisateur est attaché à une partie arrière de ladite interface utilisateur (105), et dans laquelle ledit bâti articulé du cabine de passager est fixé à ladite cabine de passagers dudit véhicule (100).

7. Le système d'interface de véhicule selon la revendication 6, ledit au moins une liaison comprenant en outre une liaison télescopique (1501), dans laquelle une longueur de liaison correspondant à ladite liaison télescopique (1501) est commandée par ledit système de positionnement d'interface utilisateur (106).

8. Le système d'interface de véhicule selon l'une quelconque des revendications 1-7, dans lequel ladite interface utilisateur (105) est positionnée à 30 degrés d'un plan horizontal lorsque ladite interface utilisateur est dans ladite position d'entrée de données (701), dans lequel ladite interface utilisateur (105) est positionnée à 45 degrés d'un plan vertical lorsque ladite interface utilisateur est dans ladite position de visualisation (703), et dans lequel ladite interface utilisateur (105) est située entre ledit siège de conducteur et un siège de passager adjacent.

9. Le système d'interface de véhicule selon l'une quelconque des revendications 1-8, ledit système de positionnement d'interface utilisateur (106) comprenant en outre au moins l'un parmi un système de positionnement électromécanique et un système de positionnement hydraulique.

10. Le système d'interface de véhicule selon l'une quelconque des revendications 1-9, comprenant en outre:
un contrôleur (101) couplé audit système de positionnement d'interface utilisateur (106); et
un moniteur de l'état d'un véhicule couplé audit contrôleur (101), dans lequel ledit moniteur de l'état d'un véhicule émet un premier signal de commande lorsque ledit véhicule (100) est activé et/ou mis en mode de conduite, dans lequel ledit moniteur d'état du véhicule émet un deuxième signal de commande lorsque ledit véhicule (100) est désactivé et/ou mis en mode de parc, dans lequel ledit contrôleur (101) provoque ledit système de positionnement d'interface utilisateur (106) à placer ladite interface utilisateur (105) dans ladite position d'entrée de données (701) lors de la réception dudit premier signal de commande, et dans lequel ledit contrôleur (101) provoque ledit système de positionnement d'interface utilisateur (106) à placer ladite interface utilisateur (105) dans ledit position de visualisation (703) lors de la réception dudit deuxième signal de commande.

11. Le système d'interface de véhicule selon l'une quelconque des revendications 1-10, dans lequel toucher ladite zone tactile avec ledit doigt provoque ledit système de positionnement d'interface utilisateur (106) à déplacer ladite interface utilisateur vers une position correspondante entre ladite position d'entrée de données (701) et ladite position de visualisation (703).
